# EUROPEAN PATENT APPLICATION

(11) **EP 3 836 053 A1**
(43) Date of publication of application: **16.06.2021**
(21) Application number: 18929433.3
(22) Date of filing: 07.08.2018
(51) Int. Cl.: G06Q 10/08

(54) **METHOD FOR AUTOMATICALLY ORGANIZING MULTIMODAL FREIGHT TRANSPORT SERVICES**

(71) Applicant: Gajnutdinov, Dinat Maratovich, Moskovskaya obl., 143442 (RU)
(72) Inventor: FRADKINA, Ekaterina Grigor'evna, Moscow, 127543 (RU); KONDRATENKO, Elena L'vovna, Moscow, 127081 (RU); GAJNUTDINOV, Dinar Maratovich, Moskovskaya obl., 143442 (RU)
(74) Representative: Papula Oy
(86) International application number: PCT/RU2018/000519
(87) International publication number: WO 2020/032815

(57) **Abstract**

In general, this tech solution relates to the computer technology in transport & logistics field. In particular, it relates to methods and systems intended for the multimodal freight services automatic formation. This is a multimodal freight service automated generation method in which a set of user profiles containing at least one transport & logistics service is obtained first; then, by means of transport & logistics services, links are established between user profiles by developing a user profiles network; then receives at least one user's query to search for at least one multimodal service; then searches for at least one multimodal service based on at least one user's query among the related user profiles network, and determining at least one initial and one target user's profile according to the user's request; for at least one identified pair of initial and target profiles, a multimodal user profile graph is allocated by defining a plurality of associated intermediate profiles; and the final step is displaying to the user at least one continuous multimodal graph profiles chain of links, which starts from the initial profile and ends at the target profile, which is the required multimodal service. The tech result is a reduction in the formation time and search for multimodal cargo transportation services.

## Description

### FIELD OF INVENTION

The present invention generally relates to computing in the transport & logistics field and to generating automatic multimodal freight transportation services methods and systems, in particular.

### BACKGROUND

Managing multimodal freight logistics is a complex, labor-intensive task for all market players today.

The lack of a single digital space intended for the design, supply, production & distribution means, and any changes in the value-added chain for each of the products require the shippers' significant efforts to coordinate numerous participants. It leads to inefficient expenses and increases the total response time to changes. Current changes in the demand-oriented market may necessitate numerous product design revisions by manufacturing companies and purchasing product mix by trading companies. Therefore, all recent changes have to be transferred to the entire value-added chain. This leads to changes in the suppliers' & production sites' networks and requires supply chain restructuring. IT solutions functional fragmentation within the company, suppliers, production centers, external potential suppliers that are outside the production system, and, transport & logistics operators that ensure the movement of material flows lead to the fact that product lifecycle management and change management require significant coordination and communication skills and work: from the first draft to the first complaint; from the first product version to the discontinuation of the latest one until the life cycle ends. Besides, the corporate information system within each company in most cases is a closed system that works well for the well-established functional area business architecture of one company. Accordingly, any company-internal changes and the information systems integration of two or more companies even within the same product value-added chain in particular increase the negative effects for cargo owners.

From matching the rate of change in value-added chains point of view, the complex analysis, design, and multidisciplinary geographically distributed trade and industrial complexes supply chains operational management tasks are still complicated for logistics departments of cargo owners and 4PL-operators. Finding ways and organizing the multimodal transport system is still the root issue of supply chain management. In this matter inefficiency leads to significant time and financial losses. A lot of routine work on finding contacts, generating bids, pending to receive commercial offers (CO), comparing CO from different providers on a single basis, identifying differences, receiving feedback on the quality of services, repeated clarifying queries, choosing the final offer are still done manually. Even after the transport and logistics operators' list needed for further work approval, booking multimodal transportation remains the same complex procedure that requires: studying the different types of transportation schedules within different information sources, combining trips, which requires additional accounting of customs clearance time. Transport & logistics services' booking and shipment tracking can be done in different systems from different providers. Moreover, untimely shipments negatively affect the operational work of cargo owners.

Logistics services and customer relationship portfolio management is a major challenge for 3PL-operators, freight forwarders, logistics companies. It implies a query for special rates from transport and other logistics companies, a lengthy response, results' consolidation & their comparison, setting own rate markups, managing rate markups for different client categories, sending COs to clients, tracking customer feedback. All these tasks are a time-consuming. As a result, online and offline tools needed to promote own logistics services are low efficient.

Transport services portfolio management for transport companies (carriers) process still complex, too, since the forms and tools for information related to free assets search, inquiries & negotiations with asset owners are ineffective. Also labor-intensive are contractual work, transport assets in services prompt replacement, lengthy COs waiting times for other transport companies' (carriers) services, etc. During the formation of transport services, all these affect the labor intensity and efficiency. The quality of customer services is also affected by complex processes of managing changes in transport services (changing rates, extra conditions approval, changing schedules, transport operations structure within services, hosting changes).

Transport assets operators face similar commercial problems in asset management-finding clients, negotiating, pricing, contracting, buying and leasing assets, leases withdrawal, etc. All these operations are accompanied by high transaction costs. They are rather laborious and inefficient.

Often, communication demands using different channels and tools that do not always meet the needs. E.g., e-mail, messengers WhatsApp™, WeChat™, Viber™ are used for operational communication; websites and not entirely intended social networks (Facebook™ or LinkedIn™), contextual advertising in search engines are used to promote transport services. In some countries, there are social networks for highly specialized tasks (for instance, Trucker Path™ (USA) for truckers). Many companies (carriers) use offline tools to promote their services at a time when almost every player in the transport & logistics market has access to the Internet.

Digital solutions developers have to independently implement the basic standard functionality in their apps (payments, insurance, reporting, counterparty verification, etc.). On the other hand, multiple solutions for the same industry are implemented on different technology platforms via disconnected, separate data stores. Additionally, at times there is no market intended for anonymized corporate data trading used for industry-neutral digital solutions development. All this distracts from the major task - efficient algorithms development and commercialization. Also, when building seamless supply chains, all these issues complicate the interaction between apps and hinder the developed solution's potential.

Thus, value-added chains and supply chain management is characterized by the low efficiency of communications, transactions, and operations of most types of participants. The existing technological solutions in this area do not meet the stated and expected needs.

New technologies made it possible to solve these issues by creating a digital multimodal 5PL-network, which is:
1. Equidistant from all users and is neutral like the Internet;
2. Unites all types of participants to solve any issues related to the management of value-added chains and supply chains, like social networks that bring people together;
3. By analogy with modern operating systems, it is a full-fledged ecosystem in which independent developers create & distribute apps, and users choose best apps to solve the most important issues in transport & logistics;
4. Generates a multimodal service for any query of any network user in real-time, similar to search engines that search the Internet and present results for any query the same way.

Tech background related patent app is US20160189102A1 "Tech and method for determining the route of cargo transportation". Applicant - TRADEOS LIMITED. Published: 2016-06-30. This technical solution allows determining the cargo transportation routes in real-time. However, this invention does not allow multimodal service generation. Moreover, the algorithms for designing the entire route depend on the algorithms intended to choose the first route transit node. As a result, when transit nodes are close, which is often happens, alternative routes are cut off, decreasing the choice. The system architecture is a database that stores route data in an unrelated form. In this case, a lot of auxiliary information is needed to combine private routes into a single one at the user's query, which increases the time for its processing.

In this tech solution, separate modules are provided. With each user's query, these modules check the routes through which the two addresses specified in the query can be linked. Identifying routes through hubs involves additional steps. In this case, the entire surface is divided into geo zones. Then the relevance of each zone to each hub is determined. Then "attraction zones" are determined for each hub. Depending on the "attraction zones" relevant to the point of cargo transportation departure & destination, the routes specified by the user of each hub are displayed. In this case, the user has to enter the exact addresses with each query (sometimes entering the city, zip code, street, house, etc.). Then each time the system uses several modules to bind the user's addresses with a route. These operations take time for the user. As for the system itself, compared to a solution that does not require such operations, they reduce computational performance and productivity.

This tech solution does not require the mandatory need for the user to enter departure & destination address. All you need is to refer to user profiles. Since all profiles are already presented as a complete network, the system does not need to link them to each other with each query.

### SUMMARY

This tech solution is capable of eliminating the disadvantages inherent in prior solutions related to the tech background.

Multimodal cargo transportation services automatic design in real-time is a key task and issue solved with this tech solution.

Reduction of the time needed to search and form multimodal cargo transportation services is a tech result provided via solving this tech issue.

Reduction of the time needed for analysis, design, and supply chain operations management is an additional tech result provided via solving this tech issue.

Reducing the time for booking a multimodal freight service is an additional tech result provided via solving this tech issue.

Reducing the complexity of transport services portfolio management is an additional tech result provided via solving this tech issue.

Reducing the complexity of transport assets portfolio management is an additional tech result provided via solving this tech issue.

Reducing the complexity of digital assets portfolio management for transport & logistics is an additional tech result provided via solving this tech issue.

Improving customer relationship management (CRM) efficiency throughout the entire life cycle is an additional tech result provided via solving this tech issue.

The tech result can be achieved by using the automated multimodal freight service generation. To do so there must be a set of user profiles containing at least one transport & logistics service. To form a network of user profiles, it is essential to assign links and statuses to all profiles, and then it is necessary to receive at least one user's query related to search for at least one multimodal service. Then, among the network of linked user profiles, it is necessary to search for at least one multimodal service based on at least one user's query. In this case, according to the user's query, at least one initial and at least one final user profile are determined. For a certain pair of initial and target profiles, a multimodal graph of user-profiles is allocated by defining a variety of linked intermediate profiles. As a result, the user has access to at least one continuous chain of multimodal graph profile connections. It starts with the initial profile and ends with the target profile. This is a complete picture of the multimodal service offered.

### BRIEF DESCRIPTION OF THE DRAWINGS

The detailed description provided below and the figs used herein will allow an understanding of the features and advantages of the proposed tech solution. Figs description:
FIG. 1 is a block diagram illustrating an example of using the proposed method for automatically generating multimodal freight services in real-time;
FIG. 2 is an example of a computing system that consists of components set designed to automatically generate multimodal freight services in real-time;
FIG. 3 is the content of a user's profile example;
FIG. 4 illustrates an example of links between user profiles.

### DETAILED DESCRIPTION OF ILLUSTRATIVE EMBODIMENTS OF THE INVENTION

The tech solution can be implemented on a computer or another data processing device in the form of an automated system or a computer-readable device that contains instructions for performing the proposed method.

The tech solution can be implemented as a distributed computer system via cloud components or components located on local servers.

According to the proposed tech solution, the system is a computer system or an automated system (AS), program-controlled electronic computer (electronic computer), CNC (computer numerical control), PLC (programmable logic controller), a computerized control system, or any other devices capable to perform a given, clearly defined computational operations (actions, instructions) sequence.

A command processing device is an electronic unit or an integrated circuit (microprocessor) that executes machine instructions (programs).

From one or more storage devices an instruction processing device reads and executes machine instructions (programs). Data storage devices are hard disk drives (HDD), flash memory, ROM (read-only memory), solid-state drives (SSD), optical drives, cloud storage.

A program is a sequence of instructions executed by a computer-controlled device or an instruction processing device.

Multimodal transportation - transportation of goods performed by at least two types of transport under one contract. Even if transportation is carried out by different types of transport (e.g., railway transport, sea transport, road transport, air transport) the carrier is responsible for the entire transportation.

A transport operator is an entity that issues the cargo accompanying documents. Regardless of the use of a third party in the transportation process (under the contract) or independent performance, the transport operator is responsible for the cargo and its delivery to the recipient.

The transport & logistics operator service is a set of transport & logistics services provided to customers in the course of freight transportation. The features of this service are determined by the transportation distance, type, and vehicle level. The different transport types demand and popularity additionally depend on the climate and geographical country features, national traditions, social development, and living standards. Each transport type has its advantages and disadvantages. Despite this, all transport system types have one major goal - to provide customers a service that fully satisfies their needs and requirements.

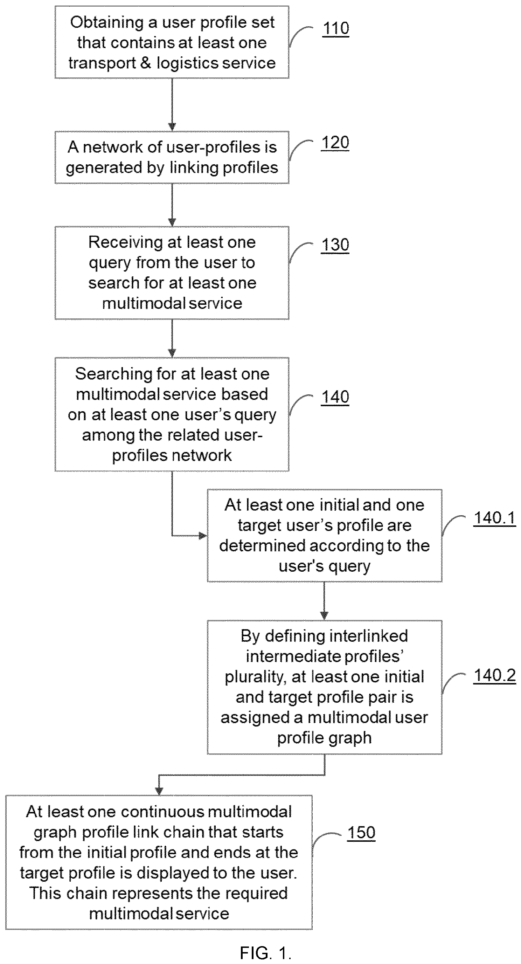

An automated multimodal freight service generation method (FIG. 1) may include the following steps:

**Step 110:** obtaining a user profile set that contains at least one transport & logistics service.

At this stage, the user's information may contain the following: user profile, user photo, links to social networks, bank card info, legal address, a cargo destination address, etc.

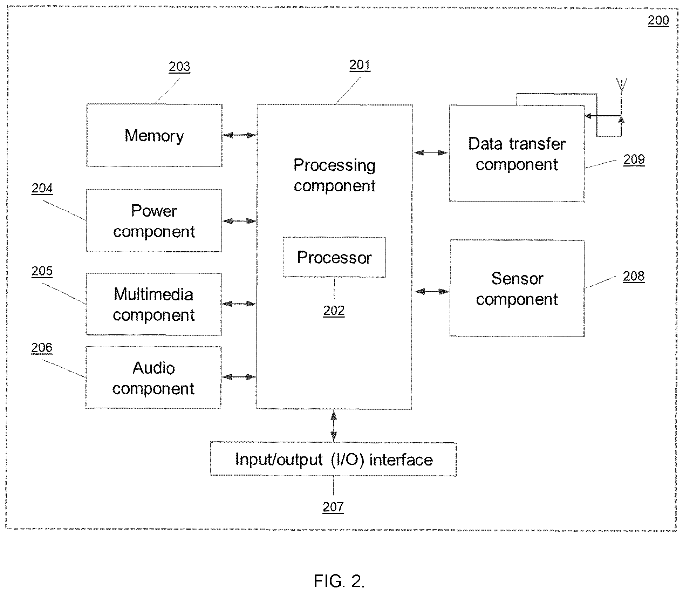

However, there are some other variants of the proposed invention. In one case, the user profile can be encrypted for data transmission in advance, and in the other (as shown in FIG. 2) the system **200** can store in memory **203** the user info of at least one user (information that at least one user can disclose) obtained from at least one social network (e.g., Facebook™, LinkedIn™, etc.). In the proposed tech solution after receiving or generating user profiles, they are stored in the user profile database, including the user's ID data installed in memory **203** (incl. geographic location, user's interests in freight transportation, previously completed orders, used transport & logistics operators' services, etc.). User ID info can be entered before the start of receiving users' queries related to searches in the user's profile in a manual mode and be automatically supplemented via the system **200** (e.g., the info posted in the user's social media page profile).

In other variants of the proposed invention, a social graph may be generated for a given user's profile. The user profile can be set by the administrator of the system **200.** A social graph is a graph whose vertices are specified social network objects, and the presence of an edge indicates the social connection among two social network objects located at these two vertices. Social network objects are user profiles, in particular. In other variants of the proposed invention, the graph is a weighted directed graph with non-negative weights. If it takes into account transport links only, then the graph itself contains contours. When using commercial links between profiles other variants of the proposed invention, an undirected graph with non-negative weights and no contours is formed. Another variant of the invention, provided that links of interest (likes) are used, forms an undirected graph with non-negative weights similar to a social graph. It should be noted that the graphs' multilayer structure dynamically changes over time (profiles, connections, weights), flexible, has a memory, and an ability to learn (obtain knowledge) & self-organize.

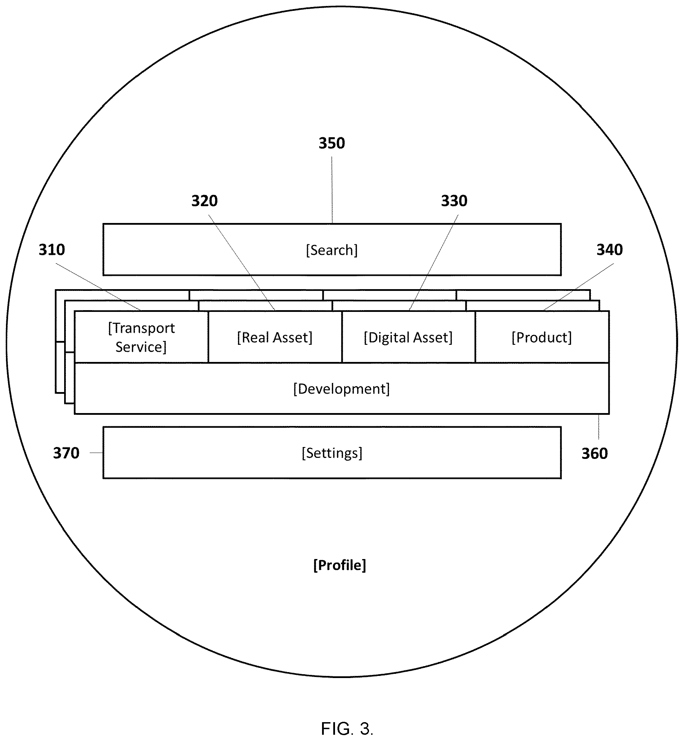

The profile may include the following key elements (as shown in FIG. 3):
a. Transport services **310;**
b. Real assets **320** (transport & production assets);
c. Digital assets **330**;
d. Products **340**;
e. Search module **350**;
f. Development module **360**;
g. Profile settings **370**;

The user of the system **200** can be a legal entity that has its requisites.

The profile can contain a list of transport services **310.** Each one contains rates (incl. special rates) with controlled access and the ability to edit them by the profile owner. Each rate contains:
i. Rate value;
ii. Rate terms:
   1. Cargo types;
   2. Shipping tare type (e.g., container);
   3. Shipping tare ownership;
   4. Customs clearance conditions;
   5. VAT (With or w/o VAT);
   6. Rate currency;
   7. Payment terms;
   8. Limitations (incl. flag or user ID to whom this rate is available from the profiles' network);
   9. Rate validity period.

The profile presented in the exemplary version of the proposed invention may contain IDs indicating the profile's transport service commercial relationship with other network profiles. E.g., with the help of such links among profile networks one may search the user (client) who is the owner of the transport service, and, conversely, one can find out which transport services the profile owner uses and which does not. In this case, commercial links are an important component necessary for managing clients' portfolios and related relationships throughout the entire life cycle. Commercial links are also an important component needed to manage throughout their entire life cycle transport services portfolio, transport assets, and digital assets.

The profile presented in an exemplary version of the proposed invention may contain a transport service technology - a structured transport service operations sequence. A transport service that involves one operation is called an elemental transport service. The transport service operation attributes are as follows:
a. The operation geography attribute is the geography of all operations related to transport service. It is the transport service route. A particular example of such a route is the geographical area of a transport service operation, which can be quite large. E.g., the geography of carriers that stick to the "hub-and-spoke" principle or the marine tramp carriers' geography of work & services. The geographic area may be narrowed down to a single point (e.g., the transport service related to throughput of goods in the port from a ship to a berth; the same service related to other transport types; goods storage in a warehouse, terminal, etc.).
b. The real transport asset attribute **320** or a transport asset attribute that performs the operation. For a more complete picture, below is an example implementation of this attribute related to a transport asset. However, a real transport asset can be used by analogy.
c. The operation duration attribute.
d. A loaded or empty operation attribute. The transport service loaded operations geography forms the transport service loaded route. In turn, the transport service empty operations geography forms the empty route.
e. Dynamic empty operation attribute. The dynamic empty operation is an operation that, under certain conditions, can be removed from the transport route service technology or replaced with a loaded one. Such operations are used to minimize empty transport services operations. The dynamic empty operation transport asset is a dynamic transport asset.
f. Transport service terminated operation attribute (relates to the first or final operation).
g. Operation costs attribute.

The profile presented in an exemplary version of the proposed invention may contain the transport service schedule.

The profile presented in an exemplary version of the proposed invention may contain the transport assets ID used within the service and the transport service capacity information. The transport asset is an asset needed for transport & logistics services provision. Examples of such assets are rolling stock (railway cars, trucks, semi-trailers), warehouses, terminals, ships & aircraft, containers.

The profile presented in an exemplary version of the proposed invention may contain a digital asset 330 ID that enables the transport service efficiency.

The profile presented in an exemplary version of the proposed invention and related to each transport service represented therein may contain a profile status (E.g., transport operator).

The profile presented in an exemplary version of the proposed invention may comprise a contract template related to each transport service. The contract is generated automatically based on the user profile data and existing links. If the user buys services (e.g., the cargo owner), then his profile contains information about the transport operator services he buys. Also, the profile user can control the other users' access to information related to the services he buys.

Additionally, the profile presented in an exemplary version of the proposed invention may contain media content related to a transport service (photo, audio, text, video, graphics, etc.).

The profile may contain information about real assets **320.** These include transportation assets & production assets. The transport asset is needed to generate a transport service, and the production asset is needed to develop a product.

In terms of the transport asset, if the user obtained the status of its operator (the statuses will be covered below), then he controls the other profiles' access to such information. Transport asset-related info includes:
a. Transport asset type (see transport asset types classifier).
b. Transport asset brand.
c. Transport asset tech & operational characteristics group needed to generate transport services based on transport assets.
d. Transport asset temporary characteristics group - production date, transport asset build date, transport asset standard service lifespan, transport asset repair date, types of repair works.
e. Commercial transaction type (in relation to a transport asset) - sale, lease. A lease may concern the entire asset (e.g., a time charter agreement, bareboat charter, railcar agreement, container flat fee) or be a part of the asset (e.g., ship sharing agreement, slot purchase agreement, lease agreement related to a part of a warehouse). If the profile does not wish to carry out commercial transactions related to the transport asset, then such information never enters the profile. Also, in such cases, access to such information for other profiles may be unavailable.
f. The transport asset commercial operation rate contains the following information:
   i. Rate value;
   ii. The transport asset commercial operation rate conditions:
      1. Terms of use (in case of a lease);
      2. Limitations incl. the unregistered users' rate unavailability flag or ID and the information related to users within the profile network this rate is available to;
      3. Rate currency;
      4. Payment terms;
      5. Others.
g. Transport service ID related to the transport asset used.
h. Digital assets ID required for the transport asset functionality.
i. Operation ID related to operations where the transport asset is used.
j. The transport asset commercial operations contract form. It is generated automatically based on the information about the transport asset. If the user is a buyer and is not a transport asset operator, then his profile contains information about transport assets that he buys or uses. The profile user also controls other users' access to the information about transport assets that he buys and uses.
k. The profile status (in relation to the transport asset).
l. Media content related to the transport asset (photo, audio, text, video, graphics, etc.).

The following information related to production assets is also present: classification parameters; tech & operational parameters; commercial terms of use; product IDs; digital assets; manufacturing operations; profile status concerning a production asset; media content.

A profile may contain digital assets **330** that are used when working within profiles' network. A digital asset is data, an algorithm, a processing data app, or a combination thereof, generated by some network profiles. It is valuable for other network users. Digital assets **330** may be available to other network profiles on either a paid basis, on a commercial basis (pay-per-use, full sale of rights, etc.) or free of charge. Via commercial links (described below) any digital asset **330** may be assigned access by other users. In such a case, one network profile subscribes to the digital asset **330** of another profile. Digital assets **330** differ by the level of complexity and industry and cross-industry issues that they solve.

Digital profile assets **330** examples featured within the 5PL digital multimodal network include, but are not limited to:
a. Apps intended for (semi-) automatic individual sections filling and the entire user profile in case of registering new users in the multimodal network.
b. Apps and transport assets empty operations' automatic minimization algorithms in real-time.
c. Apps and algorithms intended for optimizing production operations by production asset types.
d. Apps and algorithms intended for profiles' secured transactions among these profiles.
e. Apps and algorithms for cargo owners trade finance.
f. Traffic monitoring apps and algorithms in real-time.
g. Apps and algorithms that are able to forecast the transport services, transport assets demands.
h. Apps and algorithms able to forecast product demand (by kind, type, geography, etc.).
i. Apps and algorithms for managing warehouse inventory.
j. Risk management apps and algorithms related to profile network, including, but not limited to: scoring models and cargo insurance contracts self-exec apps; transport assets; transport services; a set of transport services supply chain, digital assets.
k. Automated reporting apps and algorithms intended for government agencies, analytical reporting for profile's needs, reporting for other profile networks.
l. Digital assets can include low added value. E.g., anonymized big data sets generated by profile network (a company's main activity by-product in the profile network). Such data is the digital raw material needed to develop network apps with high value-added products.

Transport services and/or transport assets pricing algorithms are a sectional example of digital assets **330.** If any algorithm is absent then the user changes rates manually. The user can independently develop a pricing algorithm or he can buy it. E.g., he may purchase a pricing algorithm subscription from another profile network that specializes in this. A profile can order adapted pricing algorithm development and impose a ban on its distribution to other profile networks (corporate solution, etc.). The pricing algorithm can be semi-automatic. In this case, manual approval of the proposed changes is required. The pricing algorithm can be configured to operate without human intervention (automatic dynamic pricing). Different pricing algorithms may be used for different transport services, transport assets, etc.

Profile network digital assets **330** may be integrated with other digital assets **330** to form complex digital solutions available to all network users. This situation is similar to how transport assets are combined into transport services in the real economic environment as well as transport services are combined into integrated supply chains. Thus, the 5PL multimodal network is a hybrid intelligent ecosystem that simultaneously combines solutions of the real and digital economies providing each potential realization in applied tasks.

A digital asset **330** listed on a user profile page generally has the following attributes, including but not limited to:
a. Title.
b. ID: transport services types; transport assets; production assets; products; connections; statuses, and other objects of the profile network where this digital asset **330** is used.
c. Digital assets **330** distributed on paid basis costs. Asset rates are set by the digital asset **330** operator that represents one of the network profiles.
d. A digital asset **330** rating is based on (incl. but not limited): number of subscriptions, number of links of interest (analogous to «I like»).
e. Profile status concerning the digital asset **330.**
f. Network profile users flag or ID that may acquire digital asset **330** subscriptions. E.g., profiles of a certain group of countries, a group of macro-region profiles.
g. Digital asset **330** public ID. If the digital asset **330** is public then, if desired, subscribers can transmit information about the subscription to other network profiles. Otherwise, subscribers technically and legally cannot disclose information on this digital asset **330** app.

The profile presented in the exemplary version of the proposed invention may contain IDs related to digital asset **330** commercial links with the rest of the network profiles. Via digital asset **330** commercial links digital asset **330** operators may reveal an actual number of subscribers and who exactly is subscribed. The complete list of subscribers to digital asset **330** is available to digital asset **330** operators only. According to digital asset **330** public restrictions and each user's privacy settings, info on digital assets users is available to subscribers.

The profile presented in the exemplary version of the proposed invention may contain products **340** info available for commercial transactions from other profiles. The simple explanation of invention implementation example is given below in which the by-product is a product, however, by-product itself, cargo, goods may be used similarly.

A product listed on a profile page has the following attributes (incl. but not limited):
a. Title.
b. Tech & operational parameters.
c. Commercial parameters.
d. Production system or value chain Info that is necessary for its development: a network of components, materials suppliers; a network of production operators (see the statuses below) that develop a product via production & digital assets.

This section allows trading and manufacturing companies to place orders to suppliers for products with the required specification. Suppliers may use it to search for orders.

It is necessary to establish a commercial link between one profile and a product of another profile from the list of profiles that are suppliers of this product to place orders.

The profile contains a search module **350** for any element both in the profile itself and in the network of profiles. Any of the found elements can be linked. It may be a link of interest (<<I like it>>) or a commercial link (e.g., book a slot on the sea line or in a multimodal service, rent rolling stock, buy XX tons of grain from a Canadian profile on FOB Shanghai terms, place an order for the production of a product from a production operator, buy a pricing algorithm for your transport service by subscription or download a free app for communicating on the profile network). For a convenient search in the network, all profiles are indexed: transport services, transport assets, production assets, digital assets, products. Network search results indicate objects with public access only or access to which is available to the person who searches. The search for available digital assets intended for purchase or use for different tasks of different profiles is made by analogy with how to search and install apps in the Apple Store™ or Google Play™.

The profile contains a development module **360** and a design module. Design objects in the profile network are:
a. Transport services and supply chains.
b. Products and their corresponding value chains where a special case of product design is the transport & production assets design.
c. Digital assets.
d. Any combination of the objects mentioned.

The development itself may be simple (e.g., setting a logistic operator's markup for an elementary transport service, uploading a dataset for use in digital asset format, or changing a supplier in a product value-added chain). Development can be complex and include simultaneous development of objects of the real economy and the digital economy (e.g., transport service system design (supply chain design) with the simultaneous new terminal planning, which will be one of the elements of the projected supply chain; standard digital apps (digital assets) purchase and own digital apps development intended for projected supply chain).

More complex developments may include a set of the following tasks:
a. A new multi-component product with high added value (e.g., an engine, car, or aircraft) design.
b. Development of material suppliers network, components, and production operators for a specific product.
c. Production assets design (if the network of profiles does not represent a production asset according to the projected parameters of a material, component, intermediate product, or if a free assembly production adapted for the final product is not found).
d. Supply chains for a new product design (detailed transport services planning, materials, components, intermediate products; consolidation warehouses or distribution warehouses planning; sales logistics to consumers planning, etc.).
e. Transport assets design if the network does not have such assets with the required parameters (e.g., there is no specialized warehouse for storing components or low-loader semitrailers with increased carrying capacity, etc.).
f. Digital assets that are an integral part of the product itself development or the development of digital solutions related to the transport, logistics, and/or production system where there are no digital solutions available on the network.

Product design includes the performance parameters of the product and the production system design, or value-added chain is required for the development. In turn, the production system includes a network of suppliers of components, parts, product materials, and a production operators network intended for direct picking & assembly of the product. Trading companies can form a product suppliers network, including multi-component product suppliers, based on the specification posted by them.

Trading companies' suppliers may be transport companies (carriers) and other trading companies. Thus, there may be several intermediaries concerning transport services as well as several intermediaries concerning the product. The number of possible intermediaries is limited by practical feasibility only.

This section allows trading and manufacturing companies to create and make changes to each product value-added chain.

By establishing a commercial link between one profile and a product of another profile, development module **360** will include the supplier in the value-added chain. The base of suppliers development for a specification can occur both at the profile that posted the specification initiative (e.g., through a closed or open tender), and at the profiles that want to become suppliers for a product specification posted by another profile initiative.

All design elements set can be visualized in the multimedia component **205** graphics module of this technical solution or in any external graphics rendering module designed to analyze and manage the user profile content.

The visualization of the supply chain network of a given profile is a special case of visualization of the user profile content. It presents transport services, terminals, warehouses, terms of delivery, cost, and other data in a visual form. In the profile user interface' graphics module one may: analyze, design the profile' supply chain; change transport services, transport assets parameters; change algorithms and terms; change the access level; change warehouse addresses, etc.

Provided that profile network pre-designed conditions or the conditions of the own supply chain network are set, automatic transport services and transport assets booking algorithms can be configured in the graphical user interface module. E.g., automated transport service booking of any profile (any company), which rate does not exceed GG average market value and whose transport service has a rating not lower than the UU level, occurs when the average market transportation rate in the DD direction is reduced to the GG level.

For example, if a large company in the clothing retail segment supply chain network standard service has a risk of being late by the time of the new season that can lead to millions of losses in sales for each day of delay then algorithms for automatic emergency services booking with small transit time may be set.

Another example covers the supply chain of a geographically distributed company with a complex production cycle in which the lack of expensive resources can lead to spoilage of other materials in large quantities and losses in production. In this case, a dual automatic replenishment algorithm is configured. The first level is a basic automatic algorithm that is generated based on a standard inventory control formula. The second level of security activates in a case when unforeseen delays are expected in the supply process according to the logistic scheme of the first security level. In such a scenario, the transport service automatically orders a small batch of resources with less transit time.

The algorithms can be customized and developed independently. On the other hand, one may use algorithms developed by other profiles, which, for example, got the same specialization and are distributed on the network on a paid or commercial basis.

AII this may be done in addition to supply chain design to minimize operational risks. In the first option, production will be adapted to sales markets, and/or intermediate consolidation warehouses can be provided. In the second example, one may design the supply chain so that goods production and expensive resources shipment will be as tight as possible.

Flexible supply chains' and the production system of products' configuration allows customizing the production & transport system for any product. It will carry out simultaneous flexible management at several levels: supplier's network, production network, product supply chain network for each supplier, and each production. All this allows to switch from one supplier to another or from one production to another at any time or change one transport service to another upon the occurrence of certain events in semi-automatic and automatic modes. E.g., a new clothing collection has been designed Established: interchangeable fabric suppliers network; a network of geographically distributed production sites ready to sew clothes; flexible supply chain network linking each supplier or from each of the production sites to each of the target consumption markets. This tech solution allows one to quickly respond to any changes (e.g., one may quickly adjust the delivery speed via flexible supply chains or flexible production with any fluctuations in demand). The system has several levels of reliability. In other words, if at one production site issues arise (e.g., when it is closed), production will be automatically redistributed to another production site under other production operators. A configured system allows to quickly respond to fashion trends by changing the collection itself.

Within a single 5PL multimodal network ecosystem this allows to design material products of any complexity; place orders for components production and the products themselves; manage supply chains of necessary components for these products and the transportation of the products while combining real and digital assets. This tech solution is basic within the material Internet - a hybrid ecosystem intended for design, production, and material objects movement in modern economics.

Profiles can be combined into groups. One may also combine several profiles into one profile, or divide one profile into several profiles.

The profile contains a section of profile settings **370.** One may configure settings that are common to the profile and its operation on the network. The settings related to individual transport services', transport assets', digital assets', and other individual profile elements' operations are contained in the corresponding sections of these elements. In profile settings **370**, one may specify company details, including but not limited to: legal address; payment details; website address; list of employees allowed to work in the profiles network; social networks; general information, including social networks in case the company does not own a website.

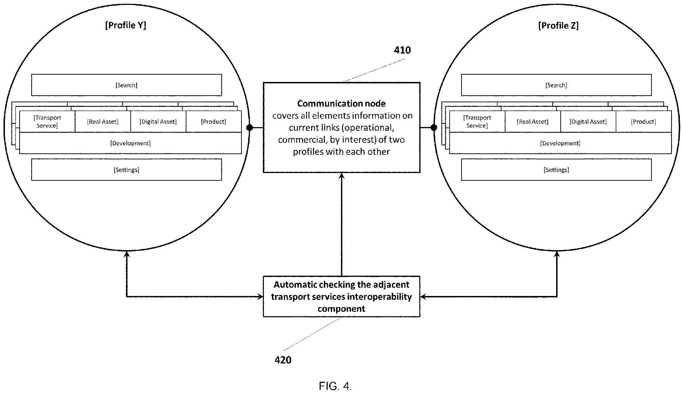

In some versions of the proposed invention, the same section has a profile communication node ID **410** (as shown in FIG. 4). The communication node **410** for each object of two profiles contains info about the actual links (operational, commercial, by interest).

**Step 120:** a network of user-profiles is generated by linking profiles.

In the next step of this tech solution, links are established between user profiles.

Several types of links may be used in this tech solution.

The first type of communication between user profiles is operational communication. Through concatenation, this link connects the transport service edge operation of one profile with an adjacent transport service edge operation of another profile provided they are compatible.

A transport service operation is called a boundary operation if it starts or ends the transport service execution. The transport services border operations are established under the international standards for the terms of delivery of Incoterms (International commercial terms), and other recognized standards for the terms of delivery.

Example of an operational link between profiles. The Port of Laem Chabang (Thailand) has a profile that is operationally linked to a user profile owned by a sea carrier with a sea line from Laem Chabang to the Shanghai (China) port. In turn, through the profile of another sea carrier, which has a line from Shanghai to the Port Vostochny of the port of Shanghai, it is operationally connected with the profile of Vostochny port (Russia, Far East). Vostochny port profile is operationally linked to a railway train operator profile up to the Khovrino terminal (Moscow) profile. As result, there is a network of user-profiles whose transport services are operationally interlinked, namely: loading onto a ship in the Laem Chabang port (Laem Chabang port profile) → transportation to Shanghai (sea carrier profile) → unloading in Shanghai port, sending to the Container Yard during transshipment, storage in Shanghai port, transferring to the second sea carrier vessel, loading cargo on board (Shanghai port profile) → transportation to Vostochny (second sea carrier profile) → unloading from the vessel, loading onto the railway platform (Vostochny port profile) → sending cargo to the Khovrino terminal (railway train operator profile) by train → unloading from the train and loading onto transport of an adjacent type (Khovrino terminal profile).

Adjacent transport services of the two profiles interoperability can be tested in many ways. A component that auto checks the adjacent transport services interoperability **420** is used for verification.

The key parameter is the boundary operations of transport services adjacency. Boundary operations of two services in two different profiles are considered contiguous when proceeding to the second service execution after the end of one transport service it is not necessary to add additional intermediary transport operations. E.g., one user profile ends the transport service boundary operation at unloading from a ship and during transportation for storage to the terminal's container yard (CY). In the second profile, the transport service starts with the cargo pick-up from the container site (CY conditions) of the same terminal. In this case, two transport services boundary operations and the transport services themselves are adjacent. But if the second transport service starts with the loaded container on the railway platform then transport operations and transport services are not contiguous since additional transport operations are required to connect two transport services (picking up cargo from a container site, cargo delivery from the container site to the railway station, loading the container onto the railway platform).

It is not enough to establish operational communication, though. Sometimes terms of use of an asset as part of a transport service (e.g., a container) prohibit its shipment as part of a competing transport service that can be marked with a separate tag in the profile. In this case, although the transport operations are contiguous, the transport services are operationally incompatible with each other.

Operational links with other transport services preferences can be configured in the transport service parameters of each of the operationally linked user profiles. These preferences can range from positive to prohibitive.

Prohibitive preferences nullify the operational combination of the transport service of one profile with the transport service of another. E.g., one profile representative does not wish its transport services to be operationally linked to adjacent transport services that have a lower rating or market share less than a predetermined percentage. In some versions of the proposed invention, the prohibition may be conditional. E.g., as long as a certain road carrier has the capacity, the marine liner service cannot be operationally linked to other road carriers at a certain port. In another version of the proposed invention, the prohibition may be light. In this case, the transport service operator establishes less favorable conditions for adjacent transport services, with which he would less like to have a combination when forming multimodal supply chains. E.g., sea transportation costs for goods that arrive at the port by cars from locations where the same profile has a railway service to the port will be higher by a given percentage. Thus, in the multimodal transportation process, there is an incentive to use the railway service.

Positive preferences stimulate certain operational links usage in the formation of multimodal chains.

When the transport service is first published on a user profile, the operational link is automatically detected. When changing the parameters of transport services of one and another profile hereafter, the operational link either remains or not.

If denote transport services boundary operations attributes as: [Profile]. [Transport service]. [Operation]. [1 / N]. [{Warehouse/Terminal}. {Incoterms}], where:
a. [Profile] is a transport service operator profile ID.
b. [Transport service] is the transport service [Profile] ID.
c. [Operation] is the operation [Transport service] [Profile] ID.
d. N is the number of operations [Transport service] [Profile].
e. [1 / N] is a s\n [operation]. For the last operation, the sequence number will be [N/N].
f. {Warehouse/Terminal} is a set of warehouses/terminals specified in the attributes [Geography] [Operation] [1 / N] [Transport service] [Profile].
g. [{Incoterms}] is a set of delivery conditions IDs under Incoterms, which correspond to [Operation] [1 / N] for each of {Warehouse / Terminal},

then the operation of the automatic adjacent transport service interoperability check component **420** of **Y** and **Z** profiles (as shown in FIG. 4) can be summarized as follows:
1. Interlinks search:
   i. For the set {[Profile Y]. [Transport service]. [Operation]. [1 / N]. [{Warehouse/Terminal}. {Incoterms}]} system searches the corresponding set of interlinks to [{Warehouse/Terminal}. {Incoterms}] with the set that follows {[Profile Z]. [Transport service]. [Operation]. [N / N]. [{Warehouse/Terminal}. {Incoterms}]}.
   ii. For the set {[Profile Y]. [Transport service]. [Operation]. [N / N]. [{Warehouse/Terminal}. {Incoterms}]} system searches the corresponding set of interlinks to [{Warehouse/Terminal}. {Incoterms}] with the set that follows {[Profile Z]. [Transport service]. [Operation]. [1 / N]. [{Warehouse/Terminal}. {Incoterms}]}.
2. If the following set ([{warehouse/Terminal}. {Incoterms}] ≠ 0) ∩ [Prohibitive combination conditions ([Profile Y], [Profile Z])] is not empty, then an operational link is automatically established between profiles Y and Z for each of the intersections identified in clause 2.

In the specific implementation of the proposed invention example, two profiles, one of which is the Deep sea line, and the second is the Short sea line (9 of 78 port group DP World terminals - 7 APM Terminals and 3 PSA terminals have interlinks [{Warehouse/Terminal}. {Incoterms}]). There are 19 interlinks in total. Suppose that: [prohibitive combination conditions ([Deep sea profile], [Short sea profile]) = 9 out of 19 interlinks].

As result, [Deep sea profile] and [Short sea profile] are operationally linked by 10 transport services.

The second communication type is commercial communication. This type of communication establishes the link of two different user profiles to transport service; its transport asset; a production asset; a digital asset or a product. E.g., if a profile for a given transport service has a status in the form of a logistics operator then it means that the profile resells the transport service on the market stand alone or as part of more complex transport service (multimodal service). In this case, any company within the network can buy this transport service from a transport service seller (a transport service operator) or from a logistics operator. If a logistics operator resells a transport stand-alone service by setting markup, then the search results will locate one transport service with the seller's rate and the logistics operator (the one who resells the transport service) rate.

By means of real assets **320** of at least one of the profiles, a commercial communication for different profiles is generated. This allows to carry out the following operations with assets:
a. Buying, selling. The current system architecture allows creating open and closed auctions of any kind.
b. Timely asset intended for operational use provision (e.g., bareboat charter; marine aircraft time charter; a container, tractor, semi-trailer, railway platform provision; production line to produce a product of another company (contract manufacturing)).
c. Providing a part of an asset intended for operational use on a timely basis (e.g., sea transportation assets joint use (e.g., VSA (vessel sharing agreement), lease of a warehouse part).

Network profiles can have commercial links of not one but several elements at once. A completed commercial link is observed when one profile is linked to all elements of another profile. E.g., a situation where one user is an agent and the other is a principal. Or if there is a link between an authorized dealer and a product manufacturer. Another example of a complete commercial link is when one company provides transport services to another and does not provide them for others who already have a profile in the system. Another example of a complete commercial link is when one company leases all transport assets to another.

In some versions of the proposed invention, links may be established between profiles by interest. It may be installed for the whole profile; a group of services; a service; a group of assets; an asset; a digital asset; a service component; the asset component; product (analog of the «like» button in communication software designed for social networks, blogs, Internet forums, social bookmarking services, news sites). A link by interest statistics and profile visitor statistics are used in the BI (Business intelligence) section of customer relationship management throughout the whole lifecycle. This link is important during the search for multimodal services (e.g., by the popularity, interests (initially, one may search among popular services only or search among all services and present the results by popularity in descending order)) for additional selection. Multimodal services search and formation is carried out via the operational link.

If operational links are established automatically only, then commercial links can be established by users in manual, semi-automatic, and full-automatic modes.

While in manual mode, the user of one profile sends a query to establish a commercial link to another profile in relation to a transport service, product, real asset, digital asset, any of the profiles. In social networks, this happens on the «add me as a friend» basis. The objects of commercial communication can be profile elements to which the query is sent to as well as profile elements that send the query itself.

When one of the profiles accepts the query in manual mode and the second profile configures the conditions according to which a query for establishing a commercial link is automatically sent from its profile to objects of another profile, the semi-automatic mode of establishing a commercial connection operates. Or, conversely, it is active when one of the profiles sets up the conditions for automatic decision-making on queries for establishing commercial link acceptance/rejection and the other profile sends a query in manual mode.

An automatic commercial communication mode is provided when each of the profiles has configured or acquired algorithms intended to send queries automatically or to make a decision on receiving commercial communication queries for profile objects in automatic mode.

Examples of commercial communication queries:
a. The cargo owner's or logistics operator's queries to the transport service operator for the transport service special conditions.
b. Mailing by cargo owner or logistics operator a tender to transport service operators.
c. The transport service operator's conditions and terms proposal to logistics operators, cargo owners.
d. An offer for a principal to become an agent, or an offer from a principal to become an agent of a specific company.
e. A request for container allocation or a proposal to lease it.
f. A request for platform allocation or a proposal to lease it.
g. A request to rent a warehouse or a proposal to lease it.
h. Request for a time charter, bareboat charter, and an offer to provide a vessel intended for charter.
i. Bidding transport assets for sale or holding a tender for its purchase.
j. A network app subscription or an offer to a certain set of network profiles to buy or install an app.
k. Placing in a supplier's network a product order.

This tech solution contains a mechanism for user profiles network self-organization in case of any endogenous and exogenous impact. E.g., when a new terminal or warehouse is put into operation, its digital profile appears in the user profiles network. In this case, based on the correspondence of at least one transport service boundary operation of the new profile with those of the remaining profile network, the new network user profile operational links with the rest of the network profiles are automatically detected.

On the other hand, existing links among profiles restructuring occur when the digital profile or transport services of one of the profiles are deleted. Links to this profile or to a remote transport service are deleted, too.

Thus, anytime the profile network has actual links & profiles, and self-organizes in real-time.

The communication node **410** contains information on existing links (operational, commercial, link by interest) for each object of each of the combination pairs among the network profiles.

In addition, the network user assigns own status to transport services, products, real & digital assets. The entire profile synth status is set automatically based on the private statuses.

The following statuses related to transport services and transport assets can be used in this tech solution.

In one version of the proposed invention, the status is displayed by the asset (transport) operator. This status is provided for the company that owns the asset. With this status, one may carry out such operations as sale, part or all of the asset intended for operational use delivery. E.g., shipowners responsible for the real asset, container fleet operators, rolling stock owners, warehouse premises owners, etc.

In another version of the proposed invention, the transport operator displays its status. This status is provided for carriers, terminals, warehouse operators. In other words, those who provide transport services. Sometimes transport asset operator acts as a transport service operator (e.g., a road carrier that owns a transport fleet) and provides road transport services on its own.

In another version of the proposed invention, the status is displayed by a logistics operator, which may be a freight forwarder, 3PL operator, or another user who resells a transport service. At the same time, there are no restrictions on the number of logistics operators «layers» concerning one service. In other words, a chain of resale is obtained (one logistics operator resells a transport service to another, who resells it to a third logistics operator, etc.). The number of logistics operators of transport services «layers» is limited by practical feasibility only. E.g., large companies have one main logistics operator managing the entire company logistics (if this role is performed by an external non-affiliated company, then it is also called a 4PL operator). The main logistics operator purchases multimodal services from logistics operators. In turn, multimodal logistics operators can purchase road transport from freight forwarders who sell transport services from several road transport companies (carriers). In this example concerning the road transportation of goods, there are three logistics operators «layers»: a road forwarder, a multimodal logistics operator, and the main logistics operator. Such tech solution helps to reduce the number of unnecessary «layers» in multimodal supply chains since it allows the end consumer to purchase transport & logistics services directly.

In another version of the proposed invention, the status is displayed by the cargo owner - the one who is the end-consumer of the transport service purchased from the transport or logistics operator.

The following statuses considering products and production assets can be used in this tech solution.

In one version of the proposed invention, the status is displayed by the manufacturing operator. This status is provided for an enterprise that operates production assets required for product output. Typically, the production operator is also the asset operator, which is responsible for its proper operation. As a rule, contract manufacturing is based on third-party company documentation assembles under a contract. This allows some companies to specialize in product development & promotion, while others in production only.

In one version of the proposed invention, the status is displayed by the merchant. This status is provided for an enterprise purchasing a product for resale.

In one version of the proposed invention, the status is displayed by the product constructor. This status is provided for a company that purchases one product to use in the production of another product. In this case, the profile intended for the purchased product can possess «product designer» status, and the production operator may have the same status as the manufactured ones. The number of product designers' «layers» is determined by the product itself, technology, and its manufacturing process. A product designer can directly purchase a product from a retailer rather than a production operator. The number of trade operators' «layers» is limited by practical feasibility only. This tech solution helps to reduce the number of superfluous trade operator «layers», which makes it possible to purchase service from a production operator. When buying a transport service from a transport or logistics operator, a manufacturing or trading operator acts as a cargo owner.

The following digital asset statuses can be used in this invention.

In one version of the proposed invention, the status is displayed by the digital asset owner who owns the rights to such digital assets.

In another version of the proposed invention, the status is displayed by a digital operator which is responsible for maintaining and modernizing the digital asset. The digital asset owner may have a «digital operator» status.

In another version of the proposed invention, the status is displayed by the digital asset user which may be any transport operator, asset operator, logistics operator, cargo owner, production operator, or trade operator.

Thus, 5PL digital multimodal network basic architecture and functionality represent a user profile data model; types of links between profiles; a list of profile statuses for each of the transport services, real assets, digital assets, products; profile content access settings.

This tech solution allows cargo owners to plan and manage value-added chains for each product.

This tech solution allows cargo owners logistics departments and 4PL-operators to plan and manage company supply chains of any level of complexity. The architecture and tools make it possible to create closed corporate networks of supply chains for geographically distributed industrial, trade, transport & logistics companies. In the case of transport and logistics companies' supply chains of corporate networks, the internal architecture is not visible to other users, and the entire supply chain network for external customer profiles is presented as a single one company transport service.

By analogy 3PL operators, logistics operators can quickly generate multimodal services (purchase transport services, form rates, etc.) and promote their services in the network (publish transport services in profile, send clients proposals to establish commercial links, etc.).

In turn, 2PL operators and transport services operators can quickly locate, purchase transport assets, build & promote transport services on their basis. Transport asset operators may quickly manage a pool of assets using a lease or buy/sell operations.

1PL operators or cargo owners can easily manage supply chains independently or with the help of a 4PL operator.

Digital asset operators can efficiently manage the lifecycle of their own transportation & logistics solutions.

It should be noted that from the technical point of view the formation of links between user profiles at this stage can be carried out by establishing a correspondence between field entities and characteristics as well as relations and attributes in the selected DBMS notation.

DBMS may be (but not limited to): Oracle Database with Oracle SQL Developer integrated development environment and PL/SQL programming language.

For each database entity, its primary key is determined after. Each entity can be represented, for ex., by one table in a database or an info contained in several tables. In some versions of the proposed invention, a number of unique keys are defined in addition to the primary key. The difference between a unique key and a primary one is that the unique key is not the main record ID factor. It cannot be referenced by a foreign key of another table. Its main task is to ensure that the field value is unique.

Links between objects (tables and columns) are established then. Thereafter, according to the tech background, all tables are normalized. In some versions of the proposed invention, the first normal form (1NF), the second normal form (2NF), the third normal form (3NF), Boyes-Codd normal form (NFBC), the fourth normal form (4NF), the fifth normal form (5NF) are used. Each of the various existing types of relationships between user profiles that can be implemented by tables can be modeled in a database. There are several types of links used in this tech solution - «one-to-many» and/or «many-to-many».

«One-to-many» link in most cases reflects the actual link between entities in the field. It is implemented by the already described pair «foreign key-primary key», i.e. when defined foreign key refers to the primary key of another table. Such a link describes the widespread mechanism of classifiers. There is a look-up table containing transport services and some codes. Moreover, the primary key is, for ex., the service ID code. The table that gathers info defines a foreign key that refers to the primary key of the classifier. After that, the transport and/or logistics service ID code is entered into it, not the name from the classifier. Such a system becomes resistant to changes in classifiers. There are few methods known in the background that change service ID codes in the displayed table to their titles both at the database server level (for DBMS client-server) and at the user application level.

Explicitly, «many-to-many» links are not supported in relational databases. But there are a number of ways to indirectly make such a connection, which successfully compensate for its absence. One of the most common ways is to add a new table whose rows are composed of foreign keys. These keys refer to the primary keys of the two tables. E.g., there are two tables: TRANSPORT_SERVICE and TRANSPORT_OPERATION. One transport service can contain several transport operations, and one transport operation may belong to different transport services. To implement such a connection, an additional table is introduced, which, for ex., is titled TRANSPORT_OPERATIONS_IN_SERVICE. It will have two foreign keys: one refers to the primary key in the TRANSPORT_SERVICE table, and the other refers to the primary key in the TRANSPORT_OPERATION table. Thus, any number of transport operations and transport services can be recorded in the TRANSPORT_OPERATIONS_IN_SERVICE table.

The database can be relational, object-oriented, hierarchical, a network database, other types of databases, or some combinations & extensions of the above. Data, which is a set of offered transport & logistics services as well as user's data can be organized in the form of tables, records, objects, other data structures, etc. Data can also be stored in special database files; special hard disk partitions; HTML-files; XML-files; spreadsheets; flat files; document files; config files; other files; stored in the memory **203** of the computing system **200** described below, etc. The database can refer to a read-only dataset or must be able to read from and write to this dataset.

While describing the present invention aspects, the terminology associated with relational databases is sometimes used herein. However, the disclosed implementations may also be applied to other database types, including previously mentioned.

**Step 130:** receiving at least one query from the user to search for at least one multimodal service.

In general, a user's query may include data based on which the profile network generates at least one multimodal service corresponding to the query. In this regard, the user's query may include the following data: cargo point of departure (sender's profile); cargo destination (recipient's profile); start date; desired delivery date; the cargo info (cargo owner's profile); cargo amount; the type of tare, etc. (but not limited to). When making a query, the user can include any additional search conditions in accordance with the parameters presented in the transport service, logistics service, and the corresponding transport assets of the transport service description. Examples of such parameters can be the technical and operational characteristics of transport assets, including the type of transport asset of the transport service; a set of temporary asset parameters (asset release date, last repair period, etc.); transport asset operator; transport services technology limitations (e.g., it is necessary to exclude transport services that have the operations of raising the hopper car above the ship's hold in the port and directly filling the hold with grain through emptying the car by opening the outlet hatch); route limitations (e.g., through the Baltic); multimodal services total cost restrictions; applying the rate conditions limitations (e.g., in the intra-customs transit mode special rate applies only); restrictions on transport service remaining capacity; status limitations (e.g., direct sales from transport operators only), and other parameters & combinations, which may be set using profile data and types of links between.

In some versions of the proposed invention, the query may be formed in text and/or in voice. The query can be a combination of text and voice queries. In some versions, the query can be generated by the user based on info obtained from the graphical user interface' drop-down fields. The source of info upon the query is also the information gathered from the profile of the user who makes the query and from the profiles of other users to which he refers.

The system preliminarily corrects syntax and spelling errors, and then stylistic and semantic errors in the case of a written query from the user (via the search string). In other words, the system performs the syntactic and semantic analysis. For this, textual libraries (for example, SyntaxNet) are used which represent accumulated history of queries recognition within the system as well as Al technologies.

E.g., given a written query: «Consolid in wareho and se on cont 20f FE to the first warehouse FFF. The cli is not at the wareho no lat then August 31^{st}». In this case, the system recognizes this query as follows: «transport operation [Consolidate in warehouse] and transport operation [send] the amount of cargo [one] container [container] standard size of container [20 feet]] restrictions on the route [through the ports of the Far East] to [to the first warehouse] to [FFF] rate condition [in the intra-customs transit mode]. Cleared goods must be where [in the first warehouse] restriction [not later than 31.08 of the current year] ».

In addition to the ability to automatically generate multimodal services in real-time, the system allows to quickly search for available information according to FIG. 3 including (but not limited to): transport assets; digital assets; transport services (rates, schedules, technologies, routes, individual transport operations, contracts, voyage capacity, assets used, transport operators); products and related product value-added chains (e.g., non-public information, access to which is opened to the cargo owner or an authorized 4PL operator internal logistics services); production operators; trading operators; info about companies, tenders, and asset auctions; info about transport services tenders.

In some versions of the proposed invention, a user searching for information about a multimodal service may not be aware of a specific web resource on which it may be found or its location. In this case, he can form a search query and perform a web search using a search engine (e.g., Yandex™, Google™, YAHOO!™, etc.). As is known, a user enters a search query, and the search engine provides a list and content of user profiles that match the search query in the form of a search results page (SERP). Thus, the search engine redirects the user's query to this tech solution network, which generates results in the form of automatically generated multimodal services. The results are available for viewing both on the present invention GUI page and on the search engine webpage.

In some versions of the proposed invention, each search query may be timestamped indicating the point in time when it was entered and/or an indication of the geographic location from which it was entered.

In general, a search app installed on a user's mobile app or web resource includes a query graphical interface and a search results graphical interface. The main purpose of the query graphical interface is to enable the user to enter a search query or «search question». The main task of this interface is to display search results that match its query entered into the query interface. Search query processing and obtaining search results will be more detailed described below.

Among other things, a search engine server is connected to the data network. It searches in response to search queries. The search engine server can also be connected to other servers. E.g., network configuration servers, network resource servers, application servers, network configuration servers via a data network.

The search engine web server may be a conventional computer server. In an exemplary version of the present invention, the search engine server may be on Dell™ PowerEdge™ server running a Microsoft™ Windows Server™ operating system. The search engine server can also be made in other network equipment environment. E.g., a router, switch, gateway, base station, etc. The search engine server can be executed on any suitable hardware and/or application software and/or system software, or a combination thereof. In the illustrated version of the tech solution, which is not limiting in scope, the search engine server is a distributed one.

In some versions, this tech solution can be modeled based on a decentralized (or centralized) distributed ledger. E.g., blockchain. In some versions transport, production, financial, and other profile operations can be performed using smart contracts under blockchain technology. Profile digital assets can also run on distributed ledger technology. E.g., blockchain. Information about blockchain technology is widely known and available in open sources. To make payments on transactions, user profiles create cryptocurrency wallets (e.g., Ethereum (ETH) or Bitcoin (BTC)) and register smart contracts on the platform, which is a single decentralized virtual machine based on the blockchain. E.g., Ethereum.

In other non-limiting versions of this tech solution, the search engine server functionality may be split and searches may be performed using multiple servers or one.

From the tech background, it is well known how to develop a search engine server. Briefly, the search engine server contains a network communication interface that is configured to allow communication with a user's mobile communication device or with another electronic device connected to a data network. Additionally, the search engine server includes one or more of the following: a computer processor operatively coupled to a communication interface and configured to perform various methods described herein. For this purpose, a processor has memory (random access memory (RAM), flash memory, etc.) and/or is operatively connected to a memory that stores machine-readable instructions that are triggered when the processor performs the various methods described herein. The search engine server can optionally be connected to (or has access to) one or more modules. E.g., a search robot module; a sorting module; search results ranking module.

The search engine server may be provided with the ability to perform web searches on resources. The search engine server functionality is well known. In short, a search engine server can:
(i) receive from a user's mobile communication device or from another electronic device on which a search form is implemented for a search query;
(ii) process the search query (search query normalization, etc.);
(iii) perform searches for user profiles matching the search query;
(iv) send the ranked list of search results to the user's mobile communications device or other electronic device intended for the search to display the user a search results page (SERP). This page contains user profiles or links to them that match search query.

**Step 140:** searching for at least one multimodal service based on at least one user's query among the related user-profiles network.

The search engine server is operatively connected to the search cluster (or otherwise accessible to it). The main search cluster task is to perform a search in response to a user's query entered through the query interface and to display search results to the user through the search results interface. The following is a description of the search cluster development, which does not limit the present tech solution scope. However, it should be borne in mind that there are other options for implementing the search cluster but not limiting the tech solution scope. Moreover, the search cluster configuration shown below has been greatly simplified. It is assumed that background specialists will be able to understand the search cluster implementation details and its components, which may be omitted in the following description to simplify it.

In general, the search cluster task is to (i) conduct search; (I) conduct analysis and search results ranking; (iii) group results and compile a search results page (SERP) for specific user's display. The search cluster configuration needed to perform the search is not specifically limited. Background specialists will understand some of the methods and means for performing the search with a search cluster as well as some of the structural components of a search cluster, which will be described briefly.

In some non-limiting versions of a search cluster development, the search cluster includes a processing module. The processing module can perform several types of search including (but not limited to) general search, vertical search, metasearch, multilevel search, etc. Various types of search specific details will not be described here since this description is not limited to any type of search. Any type of search performed by any type of method or means, as will be understood by the skilled specialist, can be used to conduct the search described. Assuming this, the processing module contains (or otherwise has access to) a search module.

The search module has access to the web search engine database(s). It is assumed that the database can be distributed. E.g., a database can have various components, each configured to perform a specific kind of search. It is also contemplated that the search engine can have access to multiple databases.

In some versions of the present technology, the search cluster may perform several types of search, including (but not limited to) vertical searches. Thus, in some non-limiting versions of the present technology, the search cluster includes (or is otherwise get access to) a vertical search module. The vertical search module can perform one or more vertical searches. E.g., among vertical images, videos, news, maps, etc.

In some non-limiting versions of the present technology, the search cluster may perform the multilevel search. These options can be implemented to increase search speed and get more relevant results. In short, a search cluster can perform (some or all): top-level meta-search, mid-level meta-search, and low-level meta-search on an indexed user profile page referenced in the user profile index. Thus, the search cluster develops with the ability to execute a crawler algorithm, which initiates the search cluster to «search» a resource and index visited users' profiles in index databases. Such algorithm is known to skilled background specialists also.

In parallel or sequentially with the general search performed by the search module, the vertical search module within the respective vertical databases is configured to perform one or more vertical searches. For descriptive purposes, the term «vertical» (e.g., the phrase «vertical search») is used to refer to a search performed on a subset of a large dataset. Moreover, this subset is grouped under the data characteristics. E.g., because one of the vertical searches is performed by the vertical search module among transport services images. Therefore, the vertical search engine can search through a subset (i.e., images) of the dataset (i.e., all searchable data). In this case, a data subset is stored in a database that is associated with the vertical search module.

**Step 140.1:** at least one initial and at least one target user's profile are determined according to the user's query.

Each network user profile contains information about the warehouses in which the user receives and sends goods. A warehouse operator as a transport service operator (storage, security, cross-docking, etc.) or a warehouse owner as a transport asset operator of (sale, lease) may have a completely different profile with which it can be associated as a commercial connection (purchase storage services or renting a warehouse for the independent storage services company), and operational communication (e.g., truck carrier company). However, if one network profile buys storage services from another network profile, then the warehouse address to which he receives or from which he sends goods is automatically indicated in the buyer's profile.

Further, on the user's query basis, starts the identification of a specific sender's profile, which already contains info about the warehouse and from which the shipment will be carried out. Also starts the identification of a specific recipient's profile, which already contains info about the warehouse that receives cargo. It is important to note that one does not need to enter or indicate any locations, since they are contained in the profiles, and the profiles are linked to each other by operational links, commercial links, and links of interest. This is how all network members' profiles (cargo owners (companies engaged in production activities, trade, etc.), 4PL operators (cargo owners' internal logistics services or outsourcing companies), 3PL operators (forwarders, logistics operators), 2PL operators (carriers, transport companies), transport assets operators) are determined & identified.

If the query is generated by the cargo owner, then the information on the cargo shipment address is indicated in his own network profile. The target profile is a profile that contains information about the delivery warehouse. In some cases, this may be a sales agent with his own network profile (with the warehouse indication). In this case, the target profile is the agent's profile. In other versions, this may be the buyer or his representative who has a network profile (indicating the delivery warehouse). In this case, the target profile is the buyer's or his representative's profile.

Other profiles can be specified in the search query as the initial profiles and target profile. When the representative (logistic operator (3PL operator, freight forwarder)) acts on behalf of the cargo owner, who indicates his client's profile containing information about warehouses, it is a common practice. Or, when a 4PL operator specifies its own profile as the initial and target profile (e.g., having its own warehouses' near-production locations intended for trade).

This tech solution feature is that locations do not need to be specified when ordering. You need to indicate your own or someone else's network profile from which or to which one needs to deliver or send the goods only. By linking different types of users profiles, this tech solution automatically links delivery and shipment addresses on the network. The delivery and shipment addresses are warehouses, terminals, which, in turn, are transport assets specified in the user network profiles.

If the user profile contains information about several warehouses, then the user selects from which warehouse to send or to which warehouse to receive the goods when ordering. In some versions, there is a warehouse's specialization by type of cargo, so specifying the type of cargo when ordering eliminates the need to select a warehouse.

As for the example presented earlier, the following semantic text is obtained - «transport operation [Consolidate in warehouse] and transport operation [send] the cargo amount [one] container [container] container size [20 feet] route restrictions [through the Far East ports] where [to the first warehouse] to [FFF] the rate conditions [internal customs transit mode]. Cleared goods must be where [in the first warehouse] restriction [not later than 31.08. of the current year] ».

According to the user's query at this step, the system must identify the initial profile and the target profile. Since there are no links to other profiles in this example, the initial profile is the profile of the user making the query. The user profile that initiates the search contains information about the warehouse from which he sends and receives goods. This means that the exact cargo point of departure geolocation is known.

In the illustrated example, the target profile is the FFF client profile. His warehouse locations are indicated in the FFF customer profile in the transport services section (if buying a storage service) or in the transport assets section (if renting the area and organizing storage). It is necessary to determine which of the FFF client warehouse goods need to be delivered. In the query, the user indicated that the cargo must be delivered to the «first warehouse». Thus, the target profile is defined as [FFF profile]. Specific geolocation within the target profile is [FFF profile. First warehouse].

**Step 140.2:** by defining interlinked intermediate profiles' plurality, at least one initial and target profile pair is assigned a multimodal user profile graph.

Considering operational links only, the profile network is a weighted directed graph with non-negative links and contours.

The profile network dynamically changes over time. The following changes dynamically:
a. Profiles;
b. Links between profiles;
c. Link weights.

The profile network is structured so that any network profile is always linked to another network profile directly or through intermediate profiles. Therefore, if one does not enter restrictions, then there can be an arbitrarily large number of options for connections between two profiles. This will certainly affect system performance. Therefore, in the absence of cutoff restrictions on the users' part (in terms of time, reliability, cost, number of intermediate counterparties, etc.), system restrictions are used, on the basis of which a multimodal graph is allocated. It happens as shown below:
1. Based on the historical user's queries for a given pair of initial and target profiles for a limited period of time between them, a multimodal graph is allocated. Of the historical intermediate profiles and links, only the set of intermediate profiles and links that are current at the time when query is automatically used.
2. If there are no historical user queries for a given pair of initial and target profiles, then:
   a. Option A:
      i. A pair of proxy profiles are defined. The first is operationally linked to the initial one. The second is operatively linked to the target profile and contains historical info in user's queries. In some cases, proxy profiles may be the same and represent one proxy profile that is simultaneously linked directly to the initial and target profiles.
      ii. A multimodal graph is allocated between proxy profiles.
      iii. By separating the operational links to the original profiles from the multimodal graph between the proxy profiles, the multimodal graph is extracted.
   b. Option B (no proxy profiles pair):
      i. First, the task of locating the minimum path (by arcs number) between given vertices (in this case, between the initial and target profiles) of a weighted directed graph with contours is solved. For this, algorithms for locating the shortest path (Dijkstra, Bellman-Ford, Floyd-Warshall, Johnson, Levite, etc.) can be used.
      ii. The number of intermediate profiles containing minimum path is determined.
      iii. Solving a graph theory dilemma about enumerating all paths between two arbitrary vertices (in this case, between the initial and target profiles) of a weighted directed graph with positive weights and contours, provided that the interdisciplinary operational connections number along any of the found paths does not exceed «N + 1» value. Where «N» is the max number of intermediate profiles determined in the previous step. The set of found interdisciplinary operational links, intermediate profiles, given initial and target profiles, forms the required multimodal graph for the case when there are no proxy profile pairs.

Upon the query, the user can specify any type of restrictions (concerning profiles, links, or their combination). Restrictions apply to any profiles and link content.

Examples include (but are not limited to): profile status; the transport service profile status (e.g., one needs to consider only offers in which the transport operator is the transport service' seller); route features (e.g., through St. Petersburg only); cumulative expected transit time; expected time of arrival at the final geolocation; the transportation total costs; any restrictions on rates terms, technology, the logistics operator title, the transport operator title; the number of logistics operators (this is very important when eliminating unnecessary intermediaries); the transport asset operator title (e.g., container fleet operator or fitting platforms operator); transport assets parameters (starting from exclusion, adding transport type and ending with the transport asset detailed characteristics (which is especially important for large-sized project transportations)); the number of transport operations that belong to different terminals in the total set of multimodal services transport operations (e.g., to exclude a large number of intermediate hubs on the multimodal service route); a specific trip of a transport service; the remaining route capacity of the transport service; the transport service popularity; availability of photos, videos, text content about the service, etc.

Any user restriction leads to the exclusion of profiles and connections that do not meet the specified restriction, which reduces the dimension and weight of the multimodal graph allocated in the absence of restrictions on the user's part.

**Step 150:** at least one continuous multimodal graph profile link chain that starts from the initial profile and ends at the target profile is displayed to the user. This chain represents the required multimodal service.

The required multimodal service contains:
a. The rate that includes all transport services rates that make up a continuous chain of links.
b. The entire transportation technology, with an indication of the route, total transit time, and the schedule of each transport services trip that make up a continuous chain of links.
c. Info on transport and digital assets in use of all multimodal transport available for viewing.
d. An automatically generated agreement with a logistics operator for the entire multimodal service or an agreement with transport operators for each of the transport services trips in a continuous chain of links.
e. The required multimodal service media content.

After the search module and the vertical search module receive the results, the search cluster can create a ranked search result list that includes the search module and the vertical search module results. The search cluster can execute various known algorithms for ranking search results.

As a non-limiting example, some ranking result methods according to their relevance to a user-entered search query are based on all or some of the following criteria: (i) the popularity of a given search query or the response to it among searches by the search module or the vertical search module; (ii) the number of results returned by the search engine or the vertical search engine; (iii) whether the search query contains any key terms (e.g., «delivery», «cargo», «transport», etc.), (iv) how often a particular search query contains key terms when entered by other users; (v) how often other users when performing similar searches, select a specific transport service or specific vertical search results when the results are presented on the search results page (SERP).

As used herein, the term «keyword» means a word or a sequence of words that indicate a given search result is likely the most relevant to a user's search query. E.g., if a search query contains the «transport service» term, then the search cluster can determine that a vertical search engine that vertically searches transport services is likely to contain the most relevant results for the user's query.

Needless to say, a subset of queries, a combination with other queries, or a combination of other factors can be taken into account to rank search results for relevance.

Next, the search cluster transmits the ranked search results to the server. The server then transmits the ranked search results to the electronic device over the data network to display to the user as a search results page (SERP). Typically, the server can generate a JavaScript Object Notation (JSON) message that contains information essential to triggering an electronic display of a search results page (SERP) that contains ranked search results generated by a search cluster. Needless to say, the message can be in a format other than JSON (e.g., eXtensible Markup Language (XML), etc.).

Referring to FIG. 2, this tech solution can be implemented in the form of a system **200,** which contains one or more of the following components: a processing component **201** containing at least one processor **202**, a memory **203**, a power component **204**, a multimedia component **205**, an audio component **206**, an input/output (I/O) interface **207**, the sensor component **208**, data transfer component **209.**

The processing component **201** mainly controls all system **200** operations (e.g., generates a user profile; searches for a multimodal service; controls the display, telephone call, data transmission, camera operation, and recording operation of the user's mobile communication device. The processing module **201** may include one or more processors **202** that implement instructions to complete all or only a portion of the steps of the above methods. Besides, processing module **201** may include one or more modules for convenient communication between other processing modules **201** and other modules. E.g., processing module **201** may include a multimedia module for convenient interaction between the multimedia component **205** and the processing component **201.**

The memory **203** can store various types of data to support the system **200** operation (e.g., a user profiles database). Examples of such data include instructions from any application or method, contact information, address book data, messages, images, videos, etc. All these operate on system **200.** Memory **203** can be developed as any type of volatile memory, nonvolatile memory devices or combinations thereof (e.g., static random access memory (SRAM), electrically erasable programmable read-only memory (EEPROM), erasable programmable read-only memory (EPROM), programmable read-only memory (EPROM), read-only memory (ROM) magnetic memory, flash memory, magnetic disk, optical disk, and others (not limited to).

The power component **204** provides power to various system **200** components. Power component **204** may include a power management system, one or more power supplies, and other nodes for generating, controlling, and distributing power to system **200.**

The multimedia component **205** includes a screen that provides an output interface connecting the system **200,** which may be installed on the user's mobile communications device and the user. In some versions, the screen may be a liquid crystal display (LCD) or a touch panel (TP). If the screen includes a touch panel, it may be in the form of a touch screen for receiving the user's input. The touchpad includes one or more touch sensors in terms of gestures, touching, and sliding. The touch sensor can not only sense the user's touch boundaries or swipe gestures but also detect the length of time and pressure associated with touch and slide operation. In some versions, the media component **205** includes one front camera and/or one rear camera. When the system **200** is in an operating mode (e.g., shooting mode, or video mode), the front camera and/or the rear camera can receive media data from the outside. Each front camera and rear camera can be one fixed lens optical system or can include focal length or optical zoom.

The audio component **206** can output and/or input an audio signal. E.g., audio component **206** includes a single microphone (MIC) that is capable of receiving external audio when system **200** is in operation (e.g., a call mode, recording mode, and speech recognition mode). The resulting audio signal can be further stored in memory **203** or routed to a data transfer component **209.** In some versions, the audio component **206** also includes a single speaker capable of outputting an audio signal.

An input/output (I/O) interface **207** provides an interface between the processing component **201** and any peripheral interface module. Such a peripheral interface module may be a keyboard, steering wheel, button, etc. These buttons may include (but are not limited to) a start button, a volume button, an initial button, and a lock button.

The sensor component **208** contains one or more sensors and is configured to provide various aspects of assessing the state of the system **200.** E.g., the sensor component **208** can detect system **200** on/off states, the components relative position (e.g., display & keypad, one system **200** component, the presence or absence of contact between the user and the system **200,** the orientation, or acceleration/deceleration and temperature changes of the system **200**). The sensor component **208** includes a proximity sensor capable of detecting the presence of near-objects when there is no physical contact. Sensor component **208** includes an optical sensor (e.g., CMOS, or CCD image sensor) configured for use in rendering an app. In some versions, sensory component **208** contains an acceleration sensor, gyroscope sensor, magnetic sensor, pressure sensor, or temperature sensor.

Data transfer component **209** can facilitate wired or wireless communication between system **200** and other devices. System **200** can access a wireless network based on communication standards (Wi-Fi, 2G, 3G, 5G, or a combination thereof). In one version, the data transfer component **209** receives a broadcast signal or broadcast-related information from an external broadcast control system via a broadcast channel. In one version, the data transfer component **209** contains a near field communication (NFC) module to facilitate near-field communication. E.g., the NFC module may be based on radio frequency identification (RFID) technology, infrared data association (IrDA) technology, ultra-wideband (UWB) technology, Bluetooth (BT) technology, and other technologies.

In an exemplary version, the system **200** may be implemented by one or more Application-Specific Integrated Circuits (ASICs), Digital Signal Processors (DSPs), Digital Signal Processing Units (DSPs), Programmable Logic Devices (PLCs), a logic chip programmed into operating conditions (FPGA), controller, microcontroller, microprocessor, or other electronic components. Moreover, it can be configured to implement the album display method.

In an exemplary version, a nonvolatile computer-readable device contains instructions (e.g., the memory **203** includes instructions that are executed by system **200** processor **201** to implement the above-described methods for automatically generating a multimodal freight service). E.g., nonvolatile computer-readable media can be ROM, random access memory (RAM), CD, magnetic tape, floppy disks, optical storage devices, etc.

System **200** can include a display interface that transmits graphics, text, and other data from communications infrastructure (or framebuffer) for media component **205** display. System **200** includes input devices or peripherals. Peripheral devices can include one or more devices for interacting with a user's mobile communications device (e.g., keyboard, microphone, wearable device, camera, one or more audio speakers, and other sensors). Peripheral devices can be external or internal to the user's mobile communications device. Typically, a touchscreen can display graphics and text, and also provides a user interface (e.g., but not limited to, a graphical user interface (GUI)) through which a user can interact with the user's mobile communication device (e.g., access, interaction with apps running).

The background specialists will understand aspects of the present tech solution, which may be implemented as a system, method, or computer program product. Accordingly, various aspects of the present tech solution may be implemented solely as hardware, software (incl. application software, etc.), or as a version combining software and hardware aspects, which may generally be referred to as a «module», «system» or «architecture». Also, present tech solution aspects may take the form of a computer program product implemented on one or more computer-readable media having computer-readable program code that is developed thereon.

Any combination of one or more computer-readable media can also be used. The computer-readable storage device can be (without limitation) an electronic, magnetic, optical, electromagnetic, infrared, or semiconductor system, apparatus, device, or any suitable combination thereof. More specifically, examples (non-exhaustive list) of a computer-readable storage device include electrical connection using one or more wires; portable computer diskette; HDD; random access memory (RAM); a read-only memory (ROM); an erasable programmable read-only memory (EPROM or Flash memory); fiber-optic connection; permanent memory stored on a compact disk (CD-ROM); an optical storage device; magnetic storage device, or any combination of the above. As used herein, a computer-readable storage device can be any flexible storage device that contains or stores a program for use by the system itself, device, apparatus, or when connected thereto.

Program code stored in a computer-readable device can be transmitted using any device, including (without limitation) wireless, wired, fiber optic, infrared, any other suitable network, or a combination of the above.

Computer program code for performing operations in the context of the steps of the present tech solution may be written in any programming language or a combination of programming languages, including an object-oriented programming language (e.g., Java, Smalltalk, C ++, etc.) and conventional procedural programming languages (e.g., C-programming language or similar programming languages). The program code can be executed on the user's computer in whole, in part, or as a separate software package, partly on the user's computer and partly on the remote computer, or completely on the remote computer. In the latter case, the remote computer can be connected to the user's computer through any type of network (incl. a local area network (LAN), a wide area network (WAN), or an external computer connection (e.g., via the Internet, using Internet providers)).

Aspects of the present tech solution have been described in detail concerning block diagrams, schematic diagrams, and/or diagrams of methods, devices (systems), and computer program products under the present tech solution versions. It should be noted that each block of the block diagram and/or diagrams as well as a combination of blocks from the block diagram and/or diagrams, may be implemented by computer program instructions. Computer program instructions may be provided to the main computer processor, additional computer, or other data processing device to create a procedure, such that instructions executed by a computer processor or other programmable data processing device provide the functions/actions specified in a box or blocks of a block diagram and/or diagram.

Computer program instructions may also be stored on a computer-readable device that can control a computer other than a programmable data processing device or other than a device that functions in a particular way, such that the instructions stored on the computer-readable device tend to develop a device including instructions, which perform the functions/actions indicated in the block of the block diagram and/or diagram.

## Claims

1. An automated multimodal freight service development method covers the following steps:
• Obtaining a user's profile set that contains at least one transport & logistics service;
• A network of user-profiles is generated by linking profiles;
• Receiving at least one query from the user to search for at least one multimodal service;
• Searching for at least one multimodal service based on at least one user's query among the related user-profiles network, and;
∘ At least one initial and at least one target user's profile are determined according to the user's query;
∘ By defining interlinked intermediate profiles' plurality, at least one initial and target profile pair is assigned a multimodal user profile graph;
• At least one continuous multimodal graph profile link chain that starts from the initial profile and ends at the target profile is displayed to the user. This chain represents the required multimodal service.

2. The method of claim 1, wherein the target user's profile is the same as the initial user's profile.

3. The method of claim 1, wherein the user's profile comprises transport service operations or transport service technology ordered sequence.

4. The method of claim 1, wherein the user's profile contains a linear transport service schedule.

5. The method of claim 1, wherein the user's profile contains the transport assets ID used in the service and the transport service's capacity.

6. The method of claim 1, wherein the user's profile data is indexed.

7. The method of claim 1, wherein an operational link is established between user profiles and/or a commercial link and/or a link of interest.

8. The method of claim 1, wherein the links between user profiles are established by establishing relations between entities and background characteristics as well as relations and attributes in the DBMS notation.

9. The method of claim 1, wherein the user's query contains data based on which the profiles network forms at least one multimodal service.

10. The method of claim 1, wherein the user's query is formed in text and/or voice, or combination.
